# EUROPEAN PATENT SPECIFICATION

(11) **EP 2 121 592 B1**
(45) Date of publication and mention of the grant of the patent: **23.05.2012**
(21) Application number: 08729613.3
(22) Date of filing: 12.02.2008
(51) Int. Cl.: C07C 409/00, C08F 10/02, C08F 2/02, C08F 2/06, C08F 4/32

(54) **A free radical initiator system and a high pressure, freeradical polymerization process for producing a low density polyethylene polymer**
Radikalstartersystem und radikalisches Hochdruck-Polymerisationsverfahren zur Herstellung eines Polyethylen-Polymers mit geringer Dichte
Système d'amorçage par radicaux libres et procédé de production d'un polymère polyéthylène basse densité par polymérisation radicalaire sous haute pression

(30) Priority: 09.03.2007 US 905999 P
(43) Date of publication of application: 25.11.2009
(73) Proprietor: Dow Global Technologies LLC, Midland, MI 48674 (US)
(72) Inventor: AERTS, Peter, Hulst, 4561MH (AN); BERBEE, Otto, Hulst, 4561XE (AN)
(74) Representative: Böhm, Brigitte
(86) International application number: PCT/US2008/053677
(87) International publication number: WO 2008/112373

(56) References cited:
- WO-A-2006/049783
- US-A- 3 775 341
- US-A- 3 956 396
- US-A1- 2004 210 016

## Description

### Field of Invention

The instant invention relates to a free radical initiator system, and a high pressure, free radical polymerization process for producing a low density polyethylene polymer.

### Background of the Invention

The use of peroxide initiators in high pressure free radical polymerization of ethylene and optionally at least one comonomer is generally known. As a general rule, peroxide initiators need to be stored at relatively low temperatures of less than 30° C. to -20° C. in order to prevent premature decomposition. For metering into the polymerization reactor by means of piston pumps and other injection equipment, the peroxide initiators are typically dissolved or diluted in a hydrocarbon solvent. However, the solubility of peroxide initiators are affected by pressure conditions and/or composition conditions experienced in the peroxide storage, and injection and metering systems. As a result, a phase separation, e.g. liquid-liquid phase separation or solid-liquid phase separation, may occur. The phase separation of peroxide/solvent mixture may interrupt its injection into the polymerization reactor or it may cause a non-uniform peroxide concentration. A stable initiator/solvent mixture having a uniform initiator concentration is an important requirement to achieve a stable high pressure free radical polymerization process and to avoid ethylene decomposition in high pressure low density polyethylene reactors.

U.S. Patent No. 3,642,747 discloses the production of ethylene homopolymers or copolymers by polymerization of ethylene or of mixtures of major amounts of ethylene and minor amounts of other monomers at super-atmospheric pressure and elevated temperature using a polymerization initiator. It is characteristic of the process according to the invention that a 2-hydro-peroxy-2-isopropylphenylpropane is used as polymerization initiator.

U.S. Patent No. 3,714,135 discloses the production of homopolymers or copolymers of ethylene by homopolymerization of ethylene or copolymerization of mixtures of ethylene and other monomers at super-atmospheric pressure and elevated temperature under the influence of a free radical, generating polymerization initiator with or without a polymerization regulator. The initiator used is a mixture of (a) an initiator having a half-life of ten to 30 hours at 50° C. and (b) an initiator having a half-life of 0.2 to 10 hours at 50° C., the half-life at 50° C. of initiator (a) being at least twice as long as that of initiator (b).

U.S. Patent No. 4,581,429 discloses a processes for free radical polymerization, in which it is possible to control the growth steps of the polymerization to produce relatively short chain length homopolymers and copolymers, including block and graft copolymers.

U.S. Patent No. 4,777,230 discloses a process for the free radical polymerization of monomers derived from substituted or unsubstituted acrylic acid/methacrylic acid and esters thereof for the production of a polymer having a narrow molecular weight distribution and an average molecular weight of less than 4000. These polymers are produced by the solution polymerizing of said monomers wherein 20 to 40 percent by weight of the monomer composition is hydroxyalkyl acrylate or methacrylate in the presence of a solvent system suitable for high solids coating applications and in the presence of an initiating amount of a tertiary alkyl hydroperoxide and/or its derivatives having at least 5 carbons wherein the initiator and monomers, alone or in combination, are added continuously at a programmed rate wherein the rate of addition corresponds approximately to the rate of decomposition of said monomer and initiator.

U.S. Patent No. 5,100,978 discloses polyethylene and copolymers of predominant amounts of ethylene and minor amounts of comonomers that are polymerizable with ethylene, obtainable by free radical polymerization of the monomers under from 1,500 to 5,000 bar and at from 40 °C. to 250 °C. by means of an initiator with virtually complete exclusion of oxygen in not less than n=3 polymerization stages.

U.S. Patent No. 5,322,912 discloses a free radical polymerization process for the preparation of a thermoplastic resin or resins comprising heating a mixture of a free radical initiator, a stable free radical agent; and at least one polymerizable monomer compound to form a thermoplastic resin or resins with a high monomer to polymer conversion; cooling the mixture; optionally isolating the thermoplastic resin or resins; and optionally washing and drying thermoplastic resin or resins.

U.S. Patent No. 6,407,191 discloses a free radical initiation polymerization process for the preparation of medium density ethylene polymers or copolymers, comprising reacting ethylene and optionally one or more comonomers at a high pressure, conveniently between 1600 and 4000 kg/cm², and at temperatures of about 150-330 °C. in a reactor system consisting of at least one autoclave reactor or of a combination of autoclave and tubular reactors, in the presence of free radical initiators and a carbonyl group containing compound.

U.S. Patent No. 6,569,962 discloses a method for producing ethylene homopolymerizates and ethylene copolymerizates in tubular reactors in the presence of radical-forming initiators, oxygen thereunder and chain transfer agents, of which at least one comprises an aldehydic structure.

U.S. Patent No. 6,727,326 discloses a method for the continuous production of ethylene homo-polymers and ethylene co-polymers in the presence of radical polymerization initiators and, optionally, molecular weight regulators in a tubular reactor with a hot water jacket and one or several reaction zones at pressures of 1000 to 4000 bar and temperatures of 120 °C. to 350 °C.

European Patent No. EP 0221610 discloses a storageable and/or transportable composition containing a peroxydicarbonate.

European Patent No. EP 0879224 discloses poly(monoperoxycarbonate) compounds and their use as free-radical initiators for polymerizing ethylenically unsaturated monomers, such as styrene, at faster production rates while retaining polymer molecular weight and polymer physical properties.

International Publication No. WO 02/051802 discloses a method to safely produce, handle and transport packaged organic peroxide formulations comprising a reactive phlegmatiser and to the use of such packaged material in polymerization and polymer modification processes, particularly the high-pressure (co)polymerization process of ethylene and/or the suspension (co)polymerization process of styrene.

International Publication No. WO 2004/052877 discloses a cyclic ketone peroxide formulation comprising one or more crystallizing cyclic ketone peroxides, one or more co-crystallizing compounds which solidify in said cyclic ketone peroxide formulation at a temperature above the crystallization temperature of the crystallizing cyclic ketone peroxide, and, optionally, one or more conventional phlegmatisers.

International Publication No. WO 2005/092966 discloses the use of a composition consisting of a crosslinking agent and an efflorescence-inhibiting agent, wherein said crosslinking agent is selected from a group formed by (a) an aromatic peroxide and (b) the combination of at least of one type aromatic peroxide and at least one type of aliphatic peroxide and said efflorescence-inhibiting agent being an alcohol. The efflorescence-inhibiting agent is embodied in the form of a sorbitol, mannitol, glycerol and a polyglycerol or the derivatives thereof.

Document US2004/210016 discloses a high pressure free radical polymerization process for producing a LDPE in which a peroxide initiator is contacted with a solvent and a ketone co-solvent.

Despite the research efforts in developing free radical initiator systems for high pressure (co)polymerization process, there is still a need for a stable initiator/solvent mixture having a uniform initiator concentration thereby facilitating a stable high pressure free radical (co)polymerization process and avoiding ethylene decomposition in such high pressure low density polyethylene reactors.

### Summary of the Invention

The instant invention is a high pressure, free radical polymerization process for producing a low density polyethylene polymer. The free radical initiator system used in the process of the invention includes at least one peroxide initiator, at least one hydrocarbon solvent, and at least one polar co-solvent according to claim 1. The high pressure, free radical polymerization process for producing a low density polyethylene polymer includes the steps of polymerizing ethylene and optionally at least one comonomer under high pressure conditions using a free radical initiator system comprising at least one peroxide initiator, at least one hydrocarbon solvent, and at least polar co-solvent according to claim 1.

### Brief Description of the Drawings

For the purpose of illustrating the invention, there is shown in the drawings a form that is exemplary; it being understood, however, that this invention is not limited to the precise arrangements and instrumentalities shown.

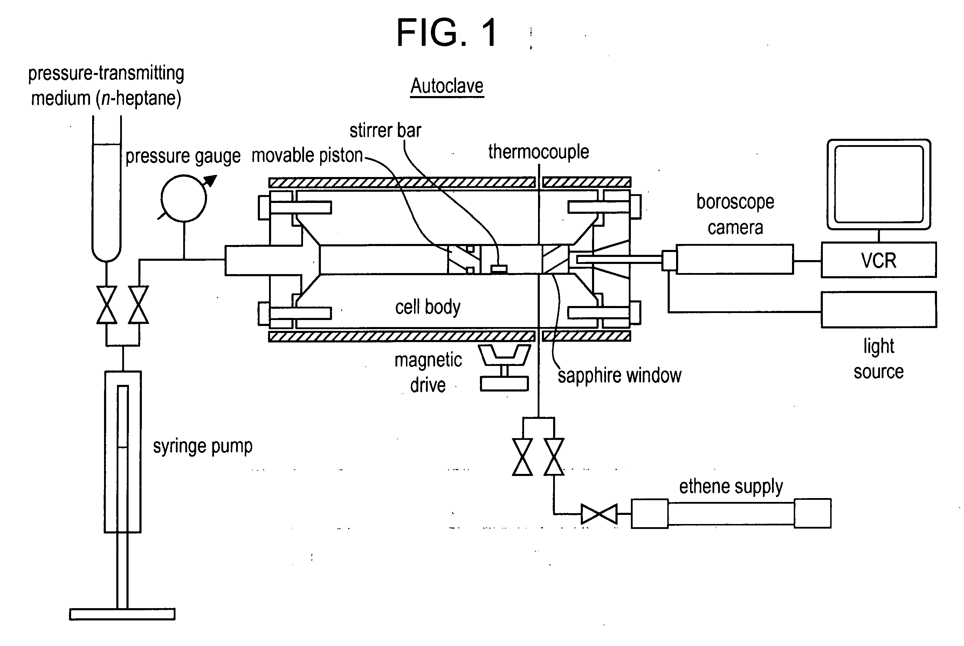

**Fig. 1** is an illustrative diagram of a high pressure optical cell;

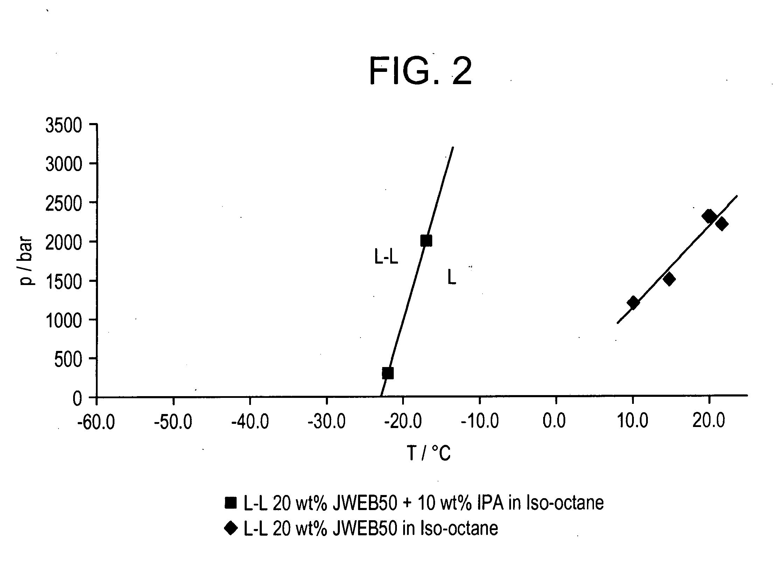

**Fig. 2** is a graph illustrating the liquid-liquid phase separation as a function of temperature and pressure for comparative sample solution 1(containing 20 weight percent Luperox JWEB50 and 80 weight percent iso-octane), and inventive sample solution 2 (containing 20 weight percent Luperox JWEB50 and 10 weight percent isopropanol and 70 weight percent iso-octane);

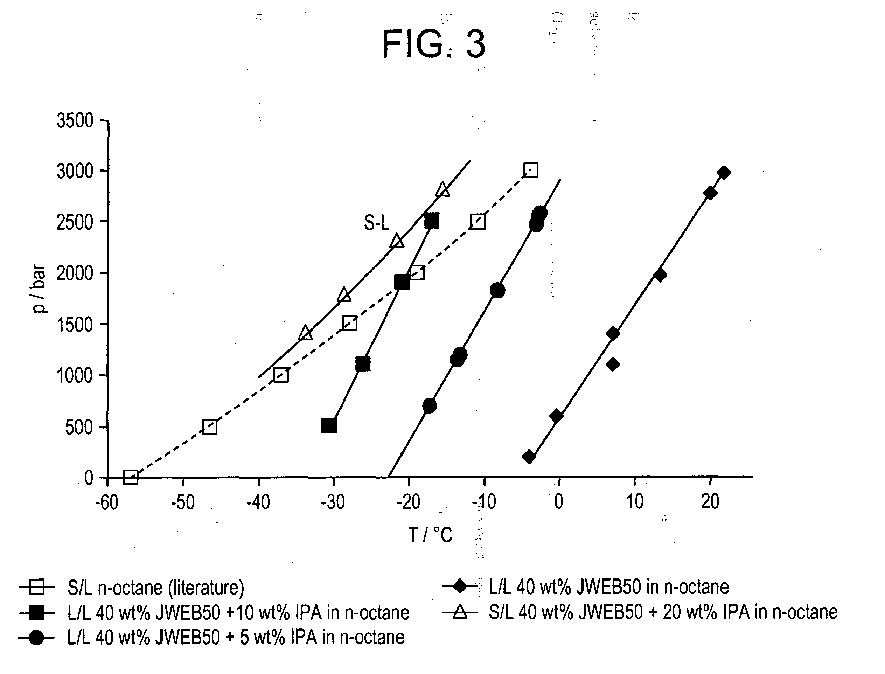

**Fig. 3** is a graph illustrating the liquid-liquid phase separation as a function of temperature and pressure for comparative sample solution 3 (containing 40 weight percent Luperox JWEB50 and 60 weight percent n-octane), inventive sample solution 4 (containing 40 weight percent Luperox JWEB50 and 5 weight percent isopropanol and 55 weight percent n-octane), and inventive sample solution 5 (containing 40 weight percent Luperox JWEB50 and 10 weight percent isopropanol and 50 weight percent n-octane). Fig. 3 is a graph further illustrating the solid-liquid phase separation as a function of temperature and pressure for comparative sample solution 6 (containing 100 weight percent n-octane), and inventive sample solution 7 (containing 40 weight percent Luperox JWEB50 and 20 weight percent isopropanol and 40 weight percent n-octane;

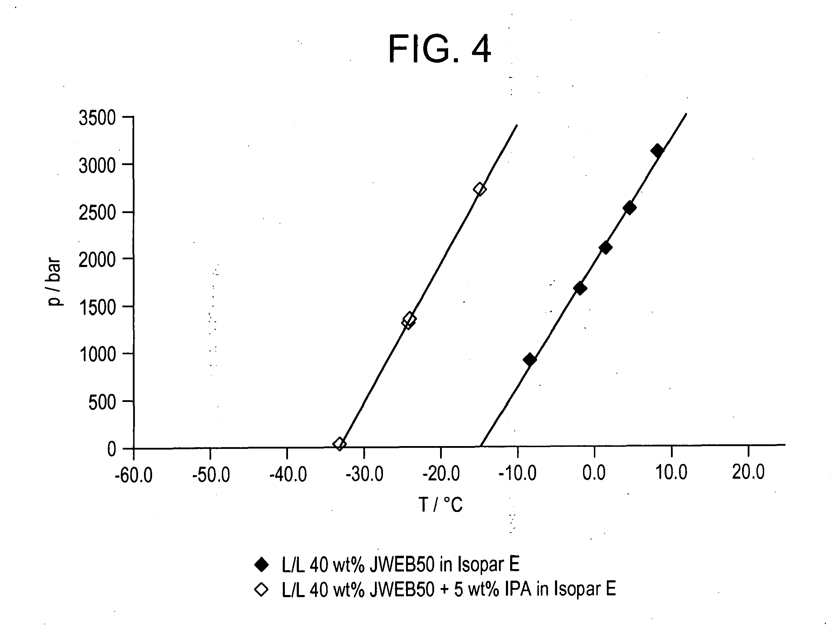

**Fig. 4** is a graph illustrating the liquid-liquid phase separation as a function of temperature and pressure for comparative sample solution 8 (containing 40 weight percent Luperox JWEB50 and 60 weight percent Isopar E), and inventive sample solution 9 (containing 40 weight percent Luperox JWEB50 and 5 weight percent isopropanol, and 55 weight percent Isopar E);

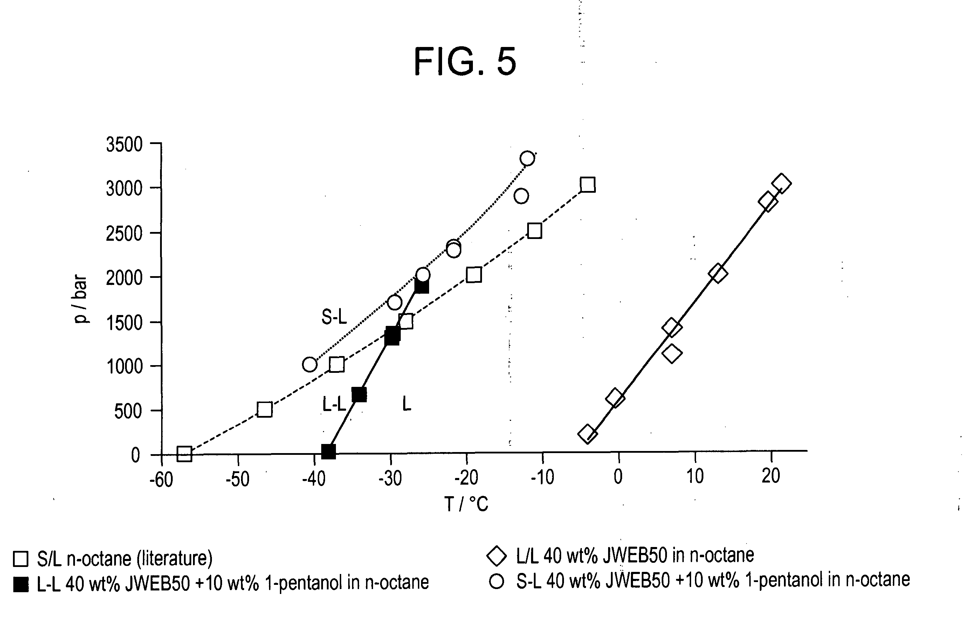

**Fig. 5** is a graph illustrating the liquid-liquid phase separation as a function of temperature and pressure for comparative sample solution 6 (containing 100 weight percent n-octane), comparative sample solution 8 (containing 40 weight percent Luperox JWEB50 and 60 weight percent n-octane), inventive sample solution 10 (containing 40 weight percent Luperox JWEB50 and 10 weight percent 1-pentanol and 50 weight percent n-octane); Fig. 5 is a graph further illustrating the solid-liquid phase separation as a function of temperature and pressure for comparative sample solution 6 (containing 100 weight percent n-octane), and inventive sample solution 10 (containing 40 weight percent Luperox JWEB50 and 10 weight percent 1-pentanol and 50 weight percent n-octane);

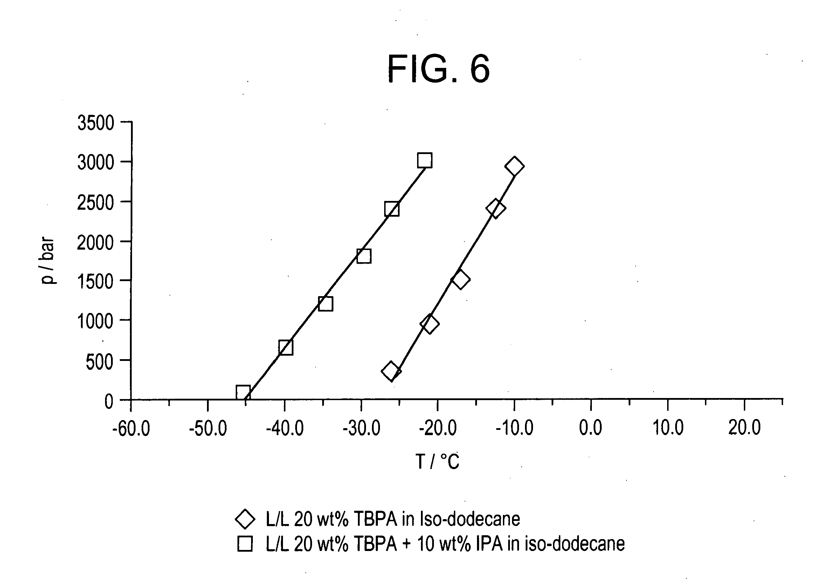

**Fig. 6** is a graph illustrating the liquid-liquid phase separation as a function of temperature and pressure for comparative sample solution 11 (containing 20 weight percent tert-butyl peroxyperacetate ("TBPA") and 80 weight percent iso-dodecane), and inventive sample solution 12 (containing 20 weight percent TBPA and 10 weight percent isopropanol and 70 weight percent iso-dodecane);

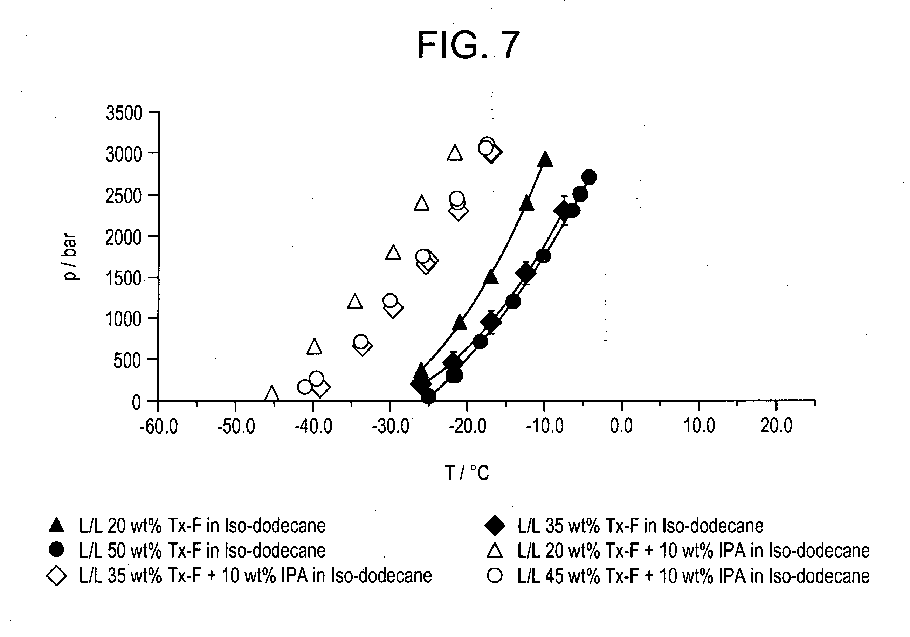

**Fig. 7** is a graph illustrating the liquid-liquid phase separation as a function of temperature and pressure for comparative sample solutions 11, 13 and 14 (containing 20 weight percent, 35 weight percent, and 50 weight percent TBPA in iso-dodecane, respectively), and for inventive sample solutions 12, 15 and 16 (containing 20 weight percent, 35 weight percent, and 45 weight percent TBPA with 10 weight percent isopropanol in iso-dodecane, respectively); and

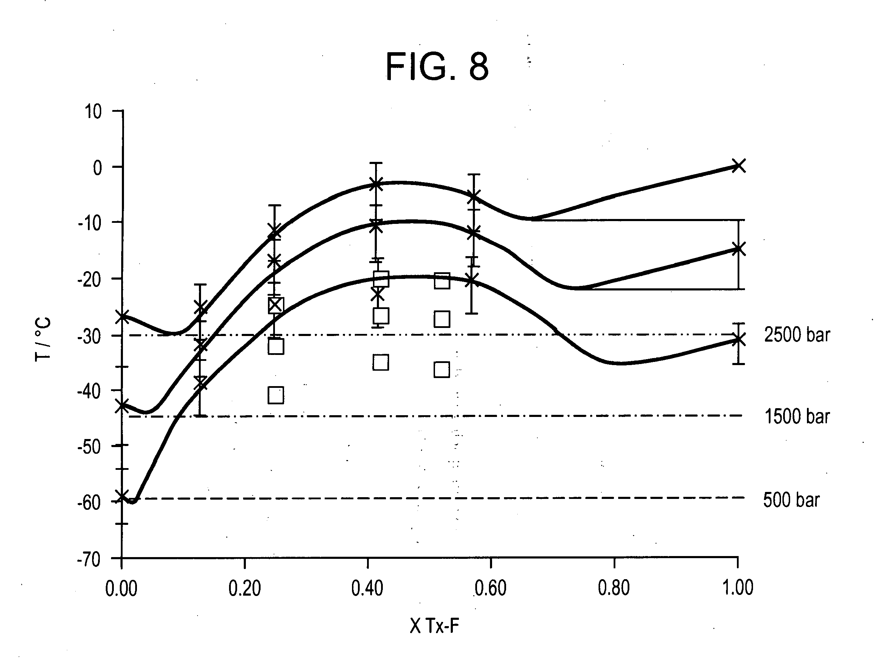

**Fig. 8** is a graph illustrating the T-X plot for Trigonox-F at 3 different pressure levels, i.e. 500 bar, 1500 bar and 2500 bar, for comparative sample solutions 11, 13 and 14 (containing 20 weight percent, 35 weight percent, and 50 weight percent TBPA in iso-dodecane, respectively), and for inventive sample solutions 12, 15 and 16 (containing 20 weight percent, 35 weight percent, and 45 weight percent TBPA with 10 weight percent isopropanol in iso-dodecane, respectively).

### Detailed Description of the Invention

The free radical initiator system used in the instant invention includes at least one peroxide initiator, at least one hydrocarbon solvent, and at least one polar co-solvent selected from the alcohols listed in claim 1.

The free radical initiator system includes at least one peroxide initiator. The peroxide initiator may, for example, be an organic peroxide. Exemplary organic peroxides include, but are not limited to, cyclic peroxides, diacyl peroxides, dialkyl peroxides, hydroperoxides, peroxycarbonates, peroxydicarbonates, peroxyesters, and peroxyketals.

Exemplary cyclic peroxides include, but are not limited to, 3,6,9-triethyl-3,6,9-trimethyl-1,4,7-triperoxonane. Such cyclic peroxides, for example, are commercially available under the tradename TRIGONOX 301, from Akzo Nobel, Arnhem, The Netherlands.

Exemplary diacyl peroxides include, but are not limited to, di(3,5,5-trimethylhexanoyl) peroxide. Such diacyl peroxides, for example, are commercially available under the tradename TRIGONOX 36, from Akzo Nobel, Arnhem, The Netherlands.

Exemplary dialkyl peroxides include, but are not limited to, 2,5-dimethyl-2,5-di(tert-butylperoxy)hexane; 2,5-dimethyl-2,5-di(tert-butylperoxy)hexyne-3; di-tert-amyl peroxide; di-tert-butyl peroxide; and tert-butyl cumyl peroxide. Such dialkyl peroxides, for example, are commercially available under the tradenames TRIGONOX 101, TRIGONOX 145, TRIGONOX 201, TRIGONOX B, and TRIGONOX T from Akzo Nobel, Arnhem, The Netherlands.

Exemplary hydroperoxides include, but are not limited to, tert-Amyl hydroperoxide; and 1,1,3,3-tetramethylbutyl hydroperoxide. Such hydroperoxides, for example, are commercially available under the tradenames TRIGONOX TAHP, and TRIGONOX TMBH, from Akzo Nobel, Arnhem, The Netherlands.

Exemplary peroxycarbonates include, but are not limited to, tert-butylperoxy 2-ethylhexyl carbonate; tert-amylperoxy 2-ethylhexyl carbonate; and tert-butylperoxy isopropyl carbonate. Such peroxycarbonates, for example, are commercially available under the tradenames TRIGONOX 117, TRIGONOX 131, and TRIGONOX BPIC, from Akzo Nobel, Arnhem, The Netherlands.

Exemplary peroxydicarbonates include, but are not limited to, di(2-ethylhexyl) peroxydicarbonates; and di-sec-butyl peroxydicarbonates. Such peroxydicarbonates, for example, are commercially available under the tradename TRIGONOX EHP, and TRIGONOX SBP, from Akzo Nobel, Arnhem, The Netherlands.

Exemplary peroxyesters include, but are not limited to, tert-amyl peroxy-2-ethylhexanoate; tert-amyl peroxyneodecanoate; tert-amyl peroxypivalate; tert-amyl peroxybenzoate; tert-amyl peroxyacetate; 2,5-dimethyl-2,5-di(2-ethylhexanoylperoxy)hexane; tert-butyl peroxy-2-ethylhexanoate; tert-butyl peroxyneodecanoate; tert-butyl peroxyneoheptanoate; tert-butyl peroxypivalate tert-butyl, peroxydiethylacetate; tert-butyl peroxyisobutyrate; 1,1,3,3-tetramethylbutyl peroxy-2-ethylhexanoate; 1,1,3,3-tetramethylbutyl peroxyneodecanoate; 1,1,3,3-tetramethylbutyl peroxypivalate; tert-butyl peroxy-3,5,5-trimethylhexanoate; cumyl peroxyneodecanoate; tert-butyl peroxybenzoate; and tert-butyl peroxyacetate. Such peroxyesters solvents, for example, are commercially available under the tradenames TRIGONOX 121; TRIGONOX 123; TRIGONOX 125; TRIGONOX 127; TRIGONOX 133; TRIGONOX 141; TRIGONOX 21; TRIGONOX 23; TRIGONOX 257; TRIGONOX 25; TRIGONOX 27; TRIGONOX 41; TRIGONOX 421; TRIGONOX 423; TRIGONOX 425;TRIGONOX 42; TRIGONOX 99; TRIGONOX C; and TRIGONOX F, from Akzo Nobel, Arnhem, The Netherlands.

Exemplary peroxyketals include, but are not limited to, 1,1-di(tert-amylperoxy)cyclohexane; 1,1-di(tert-butylperoxy)cyclohexane; 1,1-di(tert-butylperoxy)-3,3,5-trimethylcyclohexane; and 2,2-di(tert-butylperoxy)butane. Such peroxyketals, for example, are commercially available under the tradenames TRIGONOX 122, TRIGONOX 22, TRIGONOX 29, and TRIGONOX D, from Akzo Nobel, Arnhem, The Netherlands.

The free radical initiator system may, for example, include a mixture or combination of any of the above mentioned peroxide initiators.

The free radical initiator system may, for example, comprise less than 60 percent by weight of the peroxide initiator, based on the weight of the free radical initiator system. All individual values and subranges less than 60 weight percent are included herein and disclosed herein; for example, the free radical initiator system may comprise 1 to 40 percent by weight of the peroxide initiator, based on the weight of the free radical initiator system; or in the alternative, the free radical initiator system may comprise 4 to 40 percent by weight of the peroxide initiator, based on the weight of the free radical initiator system; or in the alternative, the free radical initiator system may comprise 4 to 30 percent by weight of the peroxide initiator, based on the weight of the free radical initiator system; or in the alternative, the free radical initiator system may comprise 10 to 40 percent by weight of the peroxide initiator, based on the weight of the free radical initiator system.

The free radical initiator system further includes at least one hydrocarbon solvent. The hydrocarbon solvent may, for example, be a C₅ to C₃₀ hydrocarbon solvent. Exemplary hydrocarbon solvents include, but are not limited to, mineral solvents, e.g. from mineral oils, normal paraffinic solvents, isoparaffinic solvents, and cyclic solvents. The hydrocarbon solvents may, for example, be selected from the group consisting of n-octane, iso-octane (2,2, 4-trimethylpentane), n-dodecane, iso-dodecane (2,2,4,6,6-pentamethylheptane), and other isoparaffinic solvents. Exemplary hydrocarbon solvents such as isoparaffinic solvents, for example, are commercially available under the tradenames ISOPAR C, ISPOAR E, and ISOPAR H, from ExxonMobil Company, USA. The free radical initiator system comprises 5 to 95 percent by weight of the hydrocarbon solvent, based on the weight of the free radical initiator system; or in the alternative, the free radical initiator system may comprise 5 to 90 percent by weight of the hydrocarbon solvent, based on the weight of the free radical initiator system; or in the alternative, the free radical initiator system may comprise 10 to 90 percent by weight of the hydrocarbon solvent, based on the weight of the free radical initiator system.

The free radical initiator system further includes a polar a co-solvent. The polar co-solvent is selected from isopropanol, (2-propanol), 1-pentanol propanol, and butanol, and combinations thereof, or mixtures thereof. The free radical initiator system comprises 2 to 30 percent by weight of the polar co-solvent, based on the weight of the free radical initiator system; or in the alternative, the free radical initiator system may comprise 5 to 15 percent by weight of the polar co-solvent, based on the weight of the free radical initiator system.

The free radical initiator system according to instant invention may further include a chain transfer agent. Such chain transfer agents are generally known to a person of skill in the art, and they include, but are not limited to, propane, isobutane, acetone, propylene, isopropanol, butene-1, propionaldehyde, and methyl ethyl ketone ("MEK"). In the alternative, such chain transfer agent may be charged into the reactor via a separate inlet port. In another alternative, such chain transfer agents may be mixed with ethylene, pressurized, and then charged into the reactor.

In production, the peroxide initiator may initially be dissolved or diluted in a hydrocarbon solvent, and then the polar co-solvent may be added to the peroxide initiator/hydrocarbon solvent mixture prior to the metering of the free radical initiator system into the polymerization reactor. In the alternative, the peroxide initiator may initially be dissolved or diluted in a hydrocarbon solvent, and then the polar co-solvent may be added to the peroxide initiator/hydrocarbon solvent mixture immediately prior to the metering of the free radical initiator system into the polymerization reactor. In another alternative, the peroxide initiator may be dissolved in the hydrocarbon solvent in the presence of the polar co-solvent.

The high pressure, free radical (co)polymerization process for producing a low density polyethylene polymer includes the steps of polymerizing ethylene and optionally at least one comonomer under high pressure conditions using a free radical initiator system comprising at least one peroxide initiator, at least one hydrocarbon solvent, and at least one polar co-solvent. The term (co)polymerization, as used herein, refers to both polymerization and copolymerization of ethylene.

The high pressure (co)polymerization process is generally known in the art. Generally the (co)polymerization process involves the free radical polymerization of ethylene gas in the presence of a liquid hydrocarbon medium containing organic peroxide initiators. The (co)polymerization process is generally conducted at elevated temperatures and pressures. The (co)polymerization may be carried out in either a batch-wise process or continuous manner. The (co)polymerization reaction may be carried out in a tubular reactor, an autoclave reactor, or a combination of a tubular reactor and an autoclave reactor. Such reactors are generally known to a person of skill in the art. For example, a tubular reactor may have a diameter to the length ratio of 1:14,000. The tube is typically surrounded by a jacket-tube for reception of a heat transfer medium. The jacket-tube itself may be subdivided into multiple zones operable independently of one another. At the end of the reaction tube, there is a valve which serves to control the pressure in the polymerization chamber, and to discharge the reaction product. Following this valve, there are typically a conventional high pressure separator and a conventional low pressure separator for separating the polymer obtained from unpolymerized substances, i.e., mainly from the portion of the monomers which have not been involved in the (co)polymerization.

In a high pressure (co)polymerization process, ethylene may, for example, be pressurized in a primary compressor and a secondary compressor, and then fed into the reactor. A free radical initiator system comprising at least one peroxide initiator, at least one hydrocarbon solvent, and at least one polar co-solvent is also pressurized, and then fed into the reactor. The free radical initiator system may further include a chain transfer agent; or in the alternative, a chain transfer agent may individually be pressurized and fed into the reactor. The (co)polymerization reaction is conducted at elevated temperatures and pressures. When the (co)polymerization reaction is completed, or at a desired suitable percent conversion prior to completion, the (co)polymerization reaction may be quenched or terminated by reducing the reaction temperature. For example, the (co)polymerization reaction may be terminated by reducing the processing temperature to below 100° C.; or in the alternative, the (co)polymerization reaction may be terminated by reducing the processing temperature to below 40 °C., although the exact temperature depends upon the specific reactants involved. Following completion or termination of the reaction, the resultant polymer can be optionally separated from the reaction mixture, washed and dried. Subsequent processing of the polyethylene homopolymer or copolymer can then be conducted.

The (co)polymerization pressure is typically in the range of 500 to 5000 bars. All individual values and subranges in the range of 500 to 5000 bars are included herein and disclosed herein; for example, (co)polymerization pressure is in the range of 1200 to 4000 bars; or in the alternative, (co)polymerization pressure is in the range of 1500 to 3500 bars. The (co)polymerization temperature is typically in the range of 70° C. to 380° C. All individual values and subranges in the range of 70° C. to 370° C. are included herein and disclosed herein; for example, (co)polymerization temperature is in the range of 100° C. to 365° C.; or in the alternative, (co)polymerization temperature is in the range of 120° C. to 360° C.

Ethylene homopolymers or copolymers may be produced via a high pressure polymerization process. The method of the present invention can be used for both the homopolymerization of ethylene and the copolymerization of ethylene with one or more other monomers, provided that these monomers are copolymerizable with ethylene under free-radical conditions under high pressure. Examples of suitable copolymerizable monomers are α, β-unsaturated C₃-C₈-carboxylic acids, in particular maleic acid, fumaric acid, itaconic acid, acrylic acid, methacrylic acid and crotonic acid derivates of the α, β-unsaturated C₃-C₈-carboxylic acids, e.g. unsaturated C₃-C₁₅-carboxylic acid esters, in particular ester of C₁-C₆-alkanols, or anhydrides, in particular methyl methacrylate, ethyl methacrylate, n-butyl methacrylate, ter-butyl methacrylate, methyl acrylate, ethyl acrylate n-butyl acrylate, 2-ethylhexyl acrylate, tert-butyl acrylate, methacrylic anhydride, maleic anhydride or itaconic anhydride, and α-olefins such as propene, 1-butene, 1-pentene, 1-hexene, 1-octene, or 1-decene. Vinyl carboxylates, for example vinyl acetate, can also be used as comonomers. Exemplary comonomers include, but are not limited to, n-butyl acrylate, acrylic acid and methacrylic acid. The proportion of comonomer or comonomers in the reaction mixture may be from 1 to 45 percent by weight, based on the weight of ethylene. All individual values and subranges in the range 1 to 45 weight percent are included herein and disclosed herein; for example, the proportion of comonomer or comonomers in the reaction mixture may be from 1 to 30 percent by weight, based on the weight of ethylene; or in the alternative, the proportion of comonomer or comonomers in the reaction mixture may be from 1 to 20 percent by weight, based on the weight of ethylene. In the case of copolymerization, the further comonomers are preferably fed in at a plurality of points along the reactor.

The (co)polymerization process according to instant invention may be employed to produce a low density polyethylene polymer. Such polymers may be fabricated into a variety of articles e.g. films and molded articles. Different methods may be employed to make such films and molded articles. For example, a film according to the instant invention may be formed via blown film process or cast film process. A molded article according to instant invention may be formed via injection molding process or extrusion coating process. Such methods are generally known in the art.

### Examples

The following examples illustrate the present invention but are not intended to limit the scope of the invention. The examples of the instant invention demonstrate that the free radical initiator system of the instant invention provides improved phase separation properties.

### Experimental Setup:

The high pressure solubility tests were carried out in a high pressure optical cell, as shown in Fig. 1, which was designed for the measurement of cloud-point pressures. In this setup, liquid-solid phases and liquid-liquid phase transitions were detected by visual observation, which was recorded by a camera.

### Experimental Protocol:

The cell was filled with the mixture of components and pressurized from 0 to 3500 bar at a constant temperature. The sample was agitated with a magnetic stirred while both pressure and temperature were recorded online. The phase separation behavior of the liquid was recorded in real time using a video camera.

### Formulation Ingredients:

### Initiators:

(1) Luperox® JWEB50 (polyether poly-t-butylperoxycarbonate initiator dissolved in 50 weight percent ethylbenzene), available from Arkema; and
(2) Trigonox F, (tert-butyl peroxyperacetate ("TBPA")), available from Akzo Nobel.

### Solvents:

(1) n-octane; (2) iso-octane (2,2,4-trimethylpentane); (3) n-dodecane; (4) iso-dodecane (2,2,4,6,6-pentamethylheptane); and (5) Isopar® E.

### Alcohols:

### (1) isopropanol (2-propanol); and (2) 1-pentanol

Samples solution 1-16 were prepared according to the formulations listed on Table I, and then tested for high pressure solubility according to the above-described Experimental Setup and Experimental Protocol in Experiments 1-6. The results are shown below and in Figs. 2-7.

### Example 1

Sample solutions 1 (comparative) and 2 (inventive), according to the formulations listed in Table I, were prepared and tested for high pressure solubility according to the above-described Experimental Setup and Experimental Protocol. The liquid-liquid phase separation is shown as a function of temperature and pressure for comparative sample solution 1(containing 20 weight percent Luperox JWEB50 and 80 weight percent iso-octane), and inventive sample solution 2 (containing 20 weight percent Luperox JWEB50 and 10 weight percent isopropanol and 70 weight percent iso-octane) in Fig. 2. Referring to Fig. 2, the graph shows that the liquid-liquid phase transition was lowered by approximately 30 to 35 °C. to lower temperatures due to the addition of 10 weight percent of iso-propanol in inventive sample solution 2.

### Example 2

Sample solutions 3-7, according to formulations listed in Table I, were prepared and tested for high pressure solubility according to the above-described Experimental Setup and Experimental Protocol. The liquid-liquid phase separation is shown as a function of temperature and pressure for comparative sample solution 3 (containing 40 weight percent Luperox JWEB50 and 60 weight percent n-octane), inventive sample solution 4 (containing 40 weight percent Luperox JWEB50 and 5 weight percent isopropanol and 55 weight percent n-octane), and inventive sample solution 5 (containing 40 weight percent Luperox JWEB50 and 10 weight percent isopropanol and 50 weight percent n-octane) in Fig. 3. Furthermore, the solid-liquid phase separation is shown as a function of temperature and pressure for comparative sample solution 6 (containing 100 weight percent n-octane), and inventive sample solution 7 (containing 40 weight percent Luperox JWEB50 and 20 weight percent isopropanol and 40 weight percent n-octane) in Fig. 3. Referring to Fig. 3, the graph shows that the addition of 5 weight percent iso-propanol lowered the liquid-liquid phase transition by 15 to 20 °C. to lower temperatures; the addition of 10 weight percent iso-propanol lowered the liquid-liquid phase transition by approximately 30 to 35 °C. to lower temperatures; the addition of 20 weight percent iso-propanol prevented the liquid-liquid phase transition, and improved the solubility until the solid-liquid phase transition occurs; and the addition of 20 weight percent iso-propanol lowered the solid-liquid phase transition approximately 40 °C. to lower temperatures.

### Example 3

Sample solutions 8-9, according to formulations listed in Table I, were prepared and tested for high pressure solubility according to the above-described Experimental Setup and Experimental Protocol. The liquid-liquid phase separation is shown as a function of temperature and pressure for comparative sample solution 8 (containing 40 weight percent Luperox JWEB50 and 60 weight percent Isopar E), and inventive sample solution 9 (containing 40 weight percent Luperox JWEB50 and 5 weight percent isopropanol and 55 weight percent Isopar E) in Fig. 4. Referring to Fig. 4, the graph shows that the addition of 5 weight percent of isopropanol lowered the liquid-liquid phase transition approximate by 15 to 20 °C. to lower temperatures.

### Example 4

Sample solutions 8-9, according to formulations listed in Table I, were prepared and tested for high pressure solubility according to the above-described Experimental Setup and Experimental Protocol. The liquid-liquid phase separation is shown as a function of temperature and pressure for comparative sample solution 6 (containing 100 weight percent n-octane), comparative sample solution 8 (containing 40 weight percent Luperox JWEB50 and 60 weight percent Isopar-E), inventive sample solution 10 (containing 40 weight percent Luperox JWEB50 and 10 weight percent 1-pentanol and 50 weight percent n-octane) in Fig. 3. The solid-liquid phase separation is also shown as a function of temperature and pressure for comparative sample solution 6 (containing 100 weight percent n-octane), and inventive sample solution 10 (containing 40 weight percent Luperox JWEB50 and 10 weight percent 1-pentanol and 50 weight percent n-octane) in Fig. 5. Referring to Fig. 5, the graph shows that at pressures below 2000 bar, the liquid-liquid phase transition is lowered by approximately 35 °C. to lower temperatures due to the addition of alcohol. Furthermore, the graph shows that at above 2000 bar, the solid-liquid phase transition is lowered by approximately 40 ° C. due to the addition of alcohol.

### Example 5

Sample solutions 11-12, according to formulations listed in Table I, were prepared and tested for high pressure solubility according to the above-described Experimental Setup and Experimental Protocol. The liquid-liquid phase separation is shown as a function of temperature and pressure for comparative sample solution 11 (containing 20 weight percent TBPA and 80 weight percent iso-dodecane), and inventive sample solution 12 (containing 20 weight percent TBPA and 10 weight percent isopropanol and 70 weight percent iso-dodecane) in Fig. 6. Referring to Fig. 6, the graph shows that liquid-liquid phase transition is lowered by approximately 15 to 20 °C. due to the addition of 10 weight percent of iso-propanol.

### Example 6

Sample solutions 11-12, according to formulations listed in Table I, were prepared and tested for high pressure solubility according to the above-described Experimental Setup and Experimental Protocol. The liquid-liquid phase separation is shown as a function of temperature and pressure for comparative sample solutions 11,13 and 14 (containing 20 weight percent, 35 weight percent, and 50 weight percent TBPA in iso-dodecane, respectively), and for inventive sample solutions 12, 15 and 16 (containing 20 weight percent, 35 weight percent, and 45 weight percent TBPA with 10 weight percent isopropanol in iso-dodecane, respectively) in Fig. 7. Referring to Fig. 7, the graph shows that the liquid-liquid phase separation was lowered approximately by 15 °C. to lower temperatures due to addition of isopropanol.

Referring to Fig. 8, the T-X plot for Trigonox-F is shown at 3 different pressure levels, i.e. 500 bar, 1500 bar and 2500 bar, for comparative sample solutions 11, 13, and 14 (containing 20 weight percent, 35 weight percent, and 50 weight percent of TBPA in iso-dodecane, respectively) and for inventive sample solutions 12, 15 and 16 (containing 20 weight percent, 35 weight percent, and 45 weight percent TBPA with 10 weight percent isopropanol in iso-dodecane, respectively). The T-X plot for Trigonox F shows that the liquid-liquid phase separation regions have moved to lower temperature levels at all three pressure levels, i.e. 500 bar, 1500 bar and 2500 bar, due to the presence of isopropanol.

**Table I**

| | Initiator concentration (wt %) Initiator Type | Solvent concentration (wt %) Solvent Type | Alcohol concentration (wt %) Alcohol Type |
|---|---|---|---|
| Solution 1 (comparative) | 20 wt% Luperox JWEB 50 | 80 wt% iso-octane | None |
| **Solution 2** (inventive) | **20 wt% Luperox JWEB 50** | **70 wt% iso-octane** | **10 wt% iso-propanol** |
| Solution 3 (comparative) | 40 wt% Luperox JWEB 50 | 60 wt% n-octane | None |
| **Solution 4** (inventive) | **40 wt% Luperox JWEB 50** | **55 wt% n-octane** | **5 wt% iso-propanol** |
| **Solution 5** (inventive) | **40 wt% Luperox JWEB 50** | **50 wt% n-octane** | **10 wt% iso-propanol** |
| Solution 6 (comparative) | None | 100 wt % n-octane | None |
| **Solution 7** (inventive) | **40 wt% Luperox JWEB 50** | **40 wt% n-octane** | **20 wt% iso-propanol** |
| Solution 8 (comparative) | 40 wt% Luperox JWEB 50 | 60 wt% Isopar E | None |
| **Solution 9** (inventive) | **40 wt% Luperox JWEB 50** | **55 wt% Isopar E** | **5 wt% iso-propanol** |
| **Solution 10** (inventive) | **40 wt% Luperox JWEB 50** | **50 wt% n-octane** | **10 wt% 1-pentanol** |
| Solution 11 (comparative) | 20 wt% Trigonox F | 80 wt% iso-dodecane | None |
| **Solution 12** (inventive) | **20 wt% Trigonox F** | **70 wt% iso-dodecane** iso-dodecane | **10 wt% iso-propanol** |
| Solution 13 (comparative) | 35 wt% Trigonox F | 65 wt% iso-dodecane | None |
| Solution 14 (comparative) | 50 wt% Trigonox F | 50 wt% iso-dodecane | None |
| **Solution 15** (inventive) | **35 wt% Trigonox F** | **55 wt% iso-dodecane** | **10 wt% iso-propanol** |
| **Solution 16** (inventive) | **45 wt% Trigonox F** | **45 wt% iso-dodecane** | **10 wt% iso-propanol** |

## Claims

1. A high pressure, free-radical polymerization process for producing a low density polyethylene polymer comprising the steps of:
polymerizing ethylene under high pressure conditions using a free radical initiator system comprising at least one peroxide initiator, at least one hydrocarbon solvent, and at least one polar co-solvent, wherein said polar co-solvent is one or more alcohols selected from the group consisting of isopropanol (2-propanol), 1-pentanol, propanol and butanol, and wherein
said free radical initiator system comprises 2 to 30 percent by weight of said alcohol based on the weight of said system and 5 to 95 percent by weight of said hydrocarbon solvent based on the weight of said system.

2. The high pressure, free-radical polymerization process for producing a low density polyethylene polymer according to Claim 1, wherein said peroxide initiator is an organic peroxide initiator.

3. The high pressure, free-radical polymerization process for producing a low density polyethylene polymer according to Claim 1, wherein said hydrocarbon solvent is a C₅ to C₃₀ hydrocarbon solvent.

4. The high pressure, free-radical polymerization process for producing a low density polyethylene polymer according to Claim 1, wherein said hydrocarbon solvent is a solvent selected from the group consisting of mineral solvents, normal paraffinic solvents, isoparaffinic solvents and cyclic solvents.

5. The high pressure, free-radical polymerization process for producing a low density polyethylene polymer according to Claim 1, wherein said hydrocarbon solvent is a solvent selected from the group consisting of n-octane, iso-octane (2,2, 4-trimethylpentane), n-dodecane, iso-dodecane (2,2,4,6,6-pentamethylheptane), and isoparaffin.

6. The high pressure, free-radical polymerization process for producing a low density polyethylene polymer according to Claim 1, wherein said free radical initiator system comprises 5 to 15 percent by weight of said alcohol based on the weight of said system.

7. The high pressure, free-radical polymerization process for producing a low density polyethylene polymer according to Claim 1, wherein said free radical initiator system comprises 1 to 40 percent by weight of said peroxide initiator based on the weight of said system.

8. The high pressure, free-radical polymerization process for producing a low density polyethylene polymer according to Claim 1, wherein said free radical initiator system comprises 4 to 30 percent by weight of said peroxide initiator based on the weight of said system.

9. The high pressure, free-radical polymerization process for producing a low density polyethylene polymer according to Claim 1, wherein the step of polymerizing ethylene comprises copolymerizing at least one comonomer.

10. Use of a free radical initiator system comprising at least one peroxide initiator, at least one hydrocarbon solvent, and at least one polar co-solvent, wherein said polar co-solvent is one or more alcohols selected from the group consisting of isopropanol (2-propanol), 1-pentanol, propanol and butanol for metering of a peroxide initiator into a high pressure reactor for producing a low density polyethylene polymer under high pressure conditions.

## Patentansprüche

1. Radikalisches Hochdruck-Polymerisationsverfahren zur Herstellung eines Polyethylen-Polymers mit geringer Dichte, umfassend die Schritte:
Polymerisieren von Ethylen unter Hochdruckbedingungen unter Verwendung eines Radikalstarter-Systems, umfassend wenigstens einen Peroxid-Initiator, wenigstens ein Kohlenwasserstoff-Lösungsmittel und wenigstens ein polares Co-Solvens,
wobei das polare Co-Solvens ein oder mehrere Alkohole ist, die ausgewählt sind aus der Gruppe bestehend aus Isopropanol (2-Propanol), 1-Pentanol, Propanol und Butanol und wobei das Radikalstarter-System 2 bis 30 Gew.-% des Alkohols, bezogen auf das Gewicht des Systems und 5 bis 95 Gew.-% des Kohlenwasserstoff-Lösungsmittels, bezogen auf das Gewicht des Systems, umfasst.

2. Radikalisches Hochdruck-Polymerisationsverfahren zur Herstellung eines Polyethylen-Polymers mit geringer Dichte nach Anspruch 1, wobei der Peroxid-Initiator ein organischer Peroxid-Initiator ist.

3. Radikalisches Hochdruck-Polymerisationsverfahren zur Herstellung eines Polyethylen-Polymers mit geringer Dichte nach Anspruch 1, wobei das Kohlenwasserstoff-Lösungsmittel ein C₅ bis C₃₀ Kohlenwasserstoff-Lösungsmittel ist.

4. Radikalisches Hochdruck-Polymerisationsverfahren zur Herstellung eines Polyethylen-Polymers mit geringer Dichte nach Anspruch 1, wobei das Kohlenwasserstoff-Lösungsmittel ein Lösungsmittel ist, das ausgewählt ist aus der Gruppe bestehend aus mineralischen Lösungsmitteln, normalen paraffinischen Lösungsmitteln, isoparaffinischen Lösungsmitteln und zyklischen Lösungsmitteln.

5. Radikalisches Hochdruck-Polymerisationsverfahren zur Herstellung eines Polyethylen-Polymers mit geringer Dichte nach Anspruch 1, wobei das Kohlenwasserstoff-Lösungsmittel ein Lösungsmittel ist, das ausgewählt ist aus der Gruppe bestehend aus n-Octan, iso-Octan (2,2,4-Trimethylpentan), n-Dodecan, isoDodecan (2,2,4,6,6-Pentamethylheptan) und Isoparaffin.

6. Radikalisches Hochdruck-Polymerisationsverfahren zur Herstellung eines Polyethylen-Polymers mit geringer Dichte nach Anspruch 1, wobei das Radikalstarter-System 5 bis 15 Gew.-% des Alkohols, bezogen auf das Gewicht des Systems, umfasst.

7. Radikalisches Hochdruck-Polymerisationsverfahren zur Herstellung eines Polyethylen-Polymers mit geringer Dichte nach Anspruch 1, wobei das Radikalstarter-System 1 bis 40 Gew.-% des Peroxid-Initiators, bezogen auf das Gewicht des Systems, umfasst.

8. Radikalisches Hochdruck-Polymerisationsverfahren zur Herstellung eines Polyethylen-Polymers mit geringer Dichte nach Anspruch 1, wobei das Radikalstarter-System 4 bis 30 Gew.-% des Peroxid-Initiators, bezogen auf das Gewicht des Systems, umfasst.

9. Radikalisches Hochdruck-Polymerisationsverfahren zur Herstellung eines Polyethylen-Polymers mit geringer Dichte nach Anspruch 1, wobei der Schritt des Polymerisierens von Ethylen das Copolymerisieren wenigstens eines Comonomers umfasst.

10. Verwendung eines Radikalstarter-Systems, umfassend wenigstens einen Peroxid-Initiator, wenigstens ein Kohlenwasserstoff-Lösungsmittel und wenigstens ein polares Co-Solvens, wobei das polare Co-Solvens ein oder mehrere Alkohole ist, die ausgewählt sind aus der Gruppe bestehend aus Isopropanol (2-Propanol), 1-Pentanol, Propanol und Butanol, zur Dosierung eines Peroxid-Initiators in einen Hochdruckreaktor zur Herstellung eines Polyethylen-Polymers mit geringer Dichte unter Hochdruck-Bedingungen.

## Revendications

1. Procédé de production d'un polymère polyéthylène basse densité par polymérisation radicalaire sous haute pression, comprenant l'étape suivante :
faire polymériser de l'éthylène sous haute pression, à l'aide d'un système d'amorçage par radicaux comportant au moins un amorceur de type peroxyde, au moins un solvant de type hydrocarbure, et au moins un co-solvant polaire, lequel co-solvant polaire est un alcool choisi, au nombre d'un ou plus, dans l'ensemble constitué par les isopropanol (2-propanol), 1-pentanol, propanol et butanol, et lequel système d'amorçage par radicaux comporte de 2 à 30 % dudit alcool, en poids rapporté au poids dudit système, et de 5 à 95 % dudit solvant de type hydrocarbure, en poids rapporté au poids dudit système.

2. Procédé de production d'un polymère polyéthylène basse densité par polymérisation radicalaire sous haute pression, conforme à la revendication 1, dans lequel ledit amorceur de type peroxyde est un amorceur peroxyde organique.

3. Procédé de production d'un polymère polyéthylène basse densité par polymérisation radicalaire sous haute pression, conforme à la revendication 1, dans lequel ledit solvant de type hydrocarbure est un solvant hydrocarbure en C₅-C₃₀.

4. Procédé de production d'un polymère polyéthylène basse densité par polymérisation radicalaire sous haute pression, conforme à la revendication 1, dans lequel ledit solvant de type hydrocarbure est un solvant choisi dans l'ensemble constitué par les solvants de type essence minérale, les solvants de type paraffine normale, les solvants de type isoparaffine, et les solvants de type cyclique.

5. Procédé de production d'un polymère polyéthylène basse densité par polymérisation radicalaire sous haute pression, conforme à la revendication 1, dans lequel ledit solvant de type hydrocarbure est un solvant choisi dans l'ensemble constitué par les n-octane, iso-octane (2,2,4-triméthyl-pentane), n-dodécane et iso-dodécane (2,2,4,6,6-pentaméthyl-heptane) et les isoparaffines.

6. Procédé de production d'un polymère polyéthylène basse densité par polymérisation radicalaire sous haute pression, conforme à la revendication 1, dans lequel ledit système d'amorçage par radicaux libres comporte de 5 à 15 % dudit alcool, en poids rapporté au poids dudit système.

7. Procédé de production d'un polymère polyéthylène basse densité par polymérisation radicalaire sous haute pression, conforme à la revendication 1, dans lequel ledit système d'amorçage par radicaux libres comporte de 1 à 40 % dudit amorceur de type peroxyde, en poids rapporté au poids dudit système.

8. Procédé de production d'un polymère polyéthylène basse densité par polymérisation radicalaire sous haute pression, conforme à la revendication 1, dans lequel ledit système d'amorçage par radicaux libres comporte de 4 à 30 % dudit amorceur de type peroxyde, en poids rapporté au poids dudit système.

9. Procédé de production d'un polymère polyéthylène basse densité par polymérisation radicalaire sous haute pression, conforme à la revendication 1, dans lequel l'étape de polymérisation d'éthylène comporte le fait de faire copolymériser au moins un comonomère.

10. Utilisation d'un système d'amorçage par radicaux libres comportant au moins un amorceur de type peroxyde, au moins un solvant de type hydrocarbure, et au moins un co-solvant polaire, lequel co-solvant polaire est un alcool choisi, au nombre d'un ou plus, dans l'ensemble formé par les isopropanol (2-propanol), 1-pentanol, propanol et butanol, pour introduire en quantité justement dosée un amorceur de type peroxyde dans un réacteur sous haute pression, en vue de la production d'un polymère polyéthylène basse densité sous haute pression.
